# EUROPÄISCHE PATENTSCHRIFT

(11) **EP 1 643 085 B1**
(45) Veröffentlichungstag und Bekanntmachung des Hinweises auf die Patenterteilung: **11.12.2013**
(21) Anmeldenummer: 04023560.8
(22) Anmeldetag: 04.10.2004
(51) Int. Cl.: F01D 15/10, F02C 6/18, F24H 1/22, F23D 11/36, F23D 14/46

(54) **Baueinheit mit einer Gasturbinenanordnung und einem elektrischen Generator**
Unit comprising a gas turbine arrangement and an electric generator
Composant avec une installation de turbine à gaz et un générateur électrique

(43) Veröffentlichungstag der Anmeldung: 05.04.2006
(73) Patentinhaber: Buchert, Jürgen, 97422 Schweinfurt (DE)
(72) Erfinder: Buchert, Jürgen, 97422 Schweinfurt (DE)
(74) Vertreter: FDST Patentanwälte

(56) Entgegenhaltungen:
- EP-A- 0 799 981
- DE-A1- 2 539 828
- DE-A1- 2 850 781
- DE-A1- 2 941 252
- DE-A1- 4 308 888
- DE-A1- 10 347 654
- US-A- 5 473 884
- US-A- 5 903 060
- US-B1- 6 308 513

## Beschreibung

Die Erfindung bezieht sich - allgemein gesprochen - auf eine Heizungsanlage für mindestens einen Verbraucher in einem Gebäude, mit einer Brennkammer, in der ein Energieträger, wie Gas oder Erdöl, verbrennbar ist, mit einem Heizkessel, in den die in der Brennkammer erzeugten heißen Gase einströmen und der zur Abgabe der Gase an einen Schornstein angeschlossen ist, mit einem Warmwasser-Vorlauf und einem Wasser-Rücklauf, die mit dem Heizkessel verbunden sind, und mit einer Luft-Ansaugöffnung, über die der Brennkammer Verbrennungs-Luft zum Verbrennen des Energieträgers zuführbar ist.

Sie bezieht sich speziell auf eine Anbaueinheit für den Heizkessel einer Heizungsanlage der erwähnten Art.

Im Stand der Technik sind Heizungsanlagen der eingangs genannten Art gebräuchlich. Bei solchen Heizungsanlagen ist es auch üblich, dass der Energieträger, also insbesondere Gas oder Erdöl, in einem Rohr verbrannt wird, das dem Kesselraum des Heizkessels vorgeschaltet ist. Die Verbrennung findet also - im Gegensatz zu anderen Anlagentypen - in einem speziellen vorgeschalteten Raum statt. Die heißen Gase dienen auch hier im Heizkessel, der als Wärmetauscher wirkt, zur Energieübertragung auf Wasser, das dem Verbraucher zu dessen Erwärmung zugeführt wird.

Im Stande der Technik sind auch Gasturbinenanlagen an sich bekannt. Sie besitzen z. B. einen Ölbrenner, eine nachgeordnete Brennkammer, die eigentliche Gasturbine, eine auf deren Welle sitzenden Verdichter und einen ebenfalls auf der Welle sitzenden elektrischen Generator. Solche Gasturbinenanlagen werden insbesondere bei Energieerzeugern hoher Leistung, also bei Kraftwerken für die Stromversorgung größerer Verbraucher, eingesetzt. Ihre Anwendung im Zusammenhang mit einer Heizungsanlage war aber ebenfalls bereits bekannt.

Dies beruht auf der Überlegung, dass es sinnvoll ist, mit einer Heizungsanlage der eingangs genannten Art nicht nur thermische, sondern auch elektrische Energie zu erzeugen. Dabei soll der Wirkungsgrad bei der Umwandlung des Energieinhalts des Energieträgers natürlich möglichst groß sein. Besonders nützlich wäre eine einen Brenner enthaltende Baueinheit, die sich zum Austausch eines herkömmlichen Brenners eignet und die die Abgabe elektrischer Energie ermöglicht. Die Baueinheit soll dabei so konzipiert sein, dass sich infolge dezentraler Strom-Erzeugung eine erhebliche Energie- und Kosteneinsparung für den Verbraucher ergibt. Dabei wird von der Beobachtung ausgegangen, dass der Benutzer für zentral gelieferte elektrische Energie relativ mehr Geld ausgeben muss als für dezentral erzeugte thermische und elektrische Energie. Insgesamt gesehen soll auch der Gesamtausstoß an Kohlendioxid im Sinne des Umweltschutzes verringert werden.

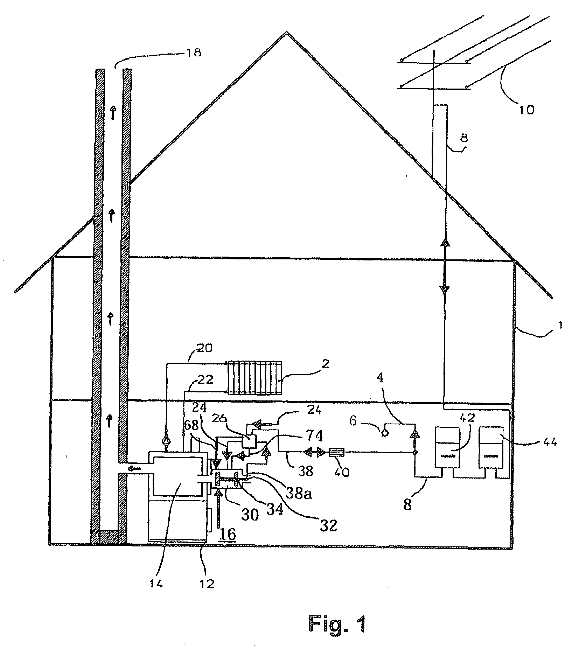

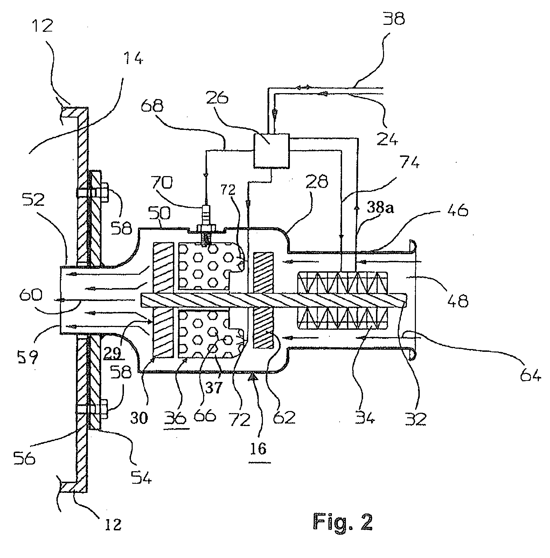

Aus der DE 29 41 252 ist bereits eine Einrichtung bekannt, bei der eine durch Verbrennungsgase angetriebene Turbine über ein Untersetzungsgetriebe einen Generator betreibt, während die Wärmeenergie der heißen Abgase, wie üblich, zum Heizen genutzt wird. Dazu sind nach Figur 1 ein Spezial-Brenner sowie ein Generator mit Turbine vorgesehen; die heißen Abgase werden in einen Heizkessel und von dort letztendlich in einen Kamin geleitet. Der Reihenfolge nach sind ein von Verbrennungsluft umströmter Generator und eine Spezial-Gasturbine mit Brennkammer auf einer Welle angeordnet. Diese Konstruktion dürfte aus Kostengründen unzweckmäßig sein. Alternativ kann nach Figur 2 die Verbrennungsluft zunächst einem auf der Welle sitzenden Kompressor und danach einem seitwärts einer Turbine angeordneten Brenner zugeführt werden. Der Brenner ist in dieser Alternative dosenförmig ausgebildet; er ist aber - wie erwähnt - seitwärts und damit sperrig angeordnet, so dass dieses nicht als eine kompakte und leicht handhabbare Baueinheit bezeichnet werden kann. Zwischen dem Kompressor und dem Generator ist dabei das erwähnte Untersetzungsgetriebe angeordnet, das bei den hier vorkommenden relativ hohen Drehzahlen verschleißanfällig ist.

Gemäß der USA 5.473.884 umfasst eine Anlage für kombinierte Erzeugung von Wärme und elektrischer Energie eine in einem Gehäuse untergebrachte Welle, auf der nacheinander ein elektrischer Generator zur Versorgung eines Netzes, ein Getriebe, ein Kompressor, eine Turbine für Gas und eine Turbine angeschlossen sind. Ein von einer Zuleitung mit Gas versorgter Brenner ist seitlich außerhalb des Gehäuses an der Turbine angeschlossen. Die heißen Brenngase passieren nach Durchgang durch die Turbine dreimal verschiedene Komponenten in einem Raum, wo sie ihre thermische Energie an Wasser abgeben, um dann zu einem Schornstein zu gelangen. Auch bei dieser Anlage ist von der seitlichen Anordnung des Brenners Gebrauch gemacht, so dass ein kompaktes Design nicht gegeben ist. Über die so wichtige Kühlung des Generators ist nichts ausgesagt. Ein Getriebe ist bei den vorausgesetzten relativ hohen Drehzahlen verschleißanfällig. Das genannte Gehäuse ist erkennbar nicht zum Austausch eines herkömmlichen Brenners in einer Hausanlage konzipiert.

Aus der DE 25 39 828 ist eine Heizeinrichtung für Kleinverbraucher bekannt. Hier soll die übliche Heizeinrichtung, z. B. von Ein- oder Zweifamilienhäusern oder Kleinhandwerksbetrieben, ersetzt werden. In diesem Fall sind auf einer Welle der Reihe nach ein Elektromotor-Generator, ein Getriebe, ein Verdichter, eine Brennkammer mit Brenner und eine Kleingasturbine angeordnet, wobei letztere die heißen Rauchgase nach Durchlcitung durch zwei Wärmetauscher an einen Schornstein abgibt. Hier wird der Verdichter mit Frischluft versorgt, und dieser leitet diese über eine spezielle Leitung an die Brennkammer mit Brenner weiter. Über den konstruktiven Aufbau des Brenners ist nichts ausgesagt, auch nicht über die Kühlung des Generators. Darüber hinaus muss bezweifelt werden, dass hier eine kompakte Bauweise vorliegt, da die besagte spezielle Leitung seitwärts absteht. An eine Konzeption als selbstständige Baueinheit, die z. B. durch Schrauben am Heizkessel befestigt werden kann, ist hier nicht gedacht.

Aus der DE 28 50 781 ist eine Heizungsenergie-Verbundaulage für die Haushaltsheizung mit einem Ölbrenner bekannt. Hier ist ein Generator über ein Getriebe mit einer Welle verbunden, auf der ein Verdichter sitzt und die durch ein größeres Brennkammergehäuse hindurch zu einer Gasturbine führt. Im Brennkammergehäuse sind ein Warmwasserspeicher, eine Einspritzdüse für Heizöl und eine Zündkerze eingebaut. Der Ölbrenner ist somit in den Haushaltsheizkessel integriert. Die im Brennkammergehäuse erzeugten Gase werden nach Wärmeaustausch über Brennkammerdüsen in die Gasturbine geleitet und dann von dort in einen Kamin abgeleitet. - Hier handelt es sich um einen kompletten Haushaltskessel. Eine kompakte und austauschbare Anbaueinheit ist nicht vorgesehen. Es ist auch anzumerken, dass ein größeres Brennkammergehäuse mit dem angegebenen Druck von 8,5 atü nur mit erheblichen Sicherheits- und Kostenaufwand in Wohngebäuden einsetzbar ist. Über die Kühlung des Generators ist auch hier nichts ausgesagt.

Aufgabe der Erfindung ist es, eine selbstständige Baueinheit für den Heizkessel einer Heizungsanlage anzugeben, die kompakt und preisgünstig ist und die den Austausch eines herkömmlichen Brenners gegen diese Baueinheit ermöglicht. Diese Baueinheit soll imstande sein, heiße Gase an den Heizkessel einer Heizungsanlage und daneben auch elektrische Energie abzugeben, wobei der Generator gut gekühlt sein soll.

Diese Aufgabe wird gemäß einer ersten Ausführungsform erfindungsgemäß gelöst durch eine Baueinheit gemäß Anspruch 1. Nach einer zweiten Ausführungsform wird sie auch durch eine Baueinheit gemäß Anspruch 3 gelöst.

Weitere vorteilhafte Ausgestaltungen dieser Baueinheiten sind in den zugeordneten Unteransprüchen beschrieben.

Ausführungsbeispiele der Erfindung werden im folgenden anhand einer Zeichnung näher beschrieben. Es zeigen:
Fig. 1 eine in einem Wohnhaus untergebrachte Heizungsanlage, die eine Gasturbine und einen von dieser angetriebenen elektrischen Generator besitzt, welcher in ein Netz einspeist,
Fig. 2 ein an einem Heizkessel lösbar befestigtes Brennergehäuse, dasals Brenner ausgebildet istsowie eine Gasturbine und einen Generator beinhaltet,
Fig. 3 eine an einem Heizkessel lösbar befestigte Baueinheit aus spezieller erster Gasturbine und elektrischem Generator mit daneben angeordnetem Brennergehäuse inclusive einer zweiten Gasturbine und
Fig. 4 eine an einem Heizkessel lösbar befestigte Baueinheit aus Gasturbine und Generator mit daneben angeordnetem Brennergehäuse, das von einem Verdichterrad am Generator mit Verbrennungsluft versorgt wird.

Nach Fig. 1 ist in einem Gebäude 1 eine Heizungsanlage untergebracht, die gleichzeitig zur thermischen Energieversorgung mindestens eines thermischen Verbrauchers 2, hier einer Warmwasser-Heizung, und zur elektrischen Energieversorgung eines elektrischen Hausnetzes 4 mit Verbraucher 6, hier z. B. einer Lampe, sowie zur Einspeisung überschüssiger Elektroenergie über eine Leitung 8 in ein öffentliches Netz 10 dient.

Kernstück der Heizungsanlage ist ein Heizkessel 12 mit Kessel- oder Brennraum 14, der von einem speziell ausgestalteten, allgemein mit 16 bezeichneten Brenner mit heißen Gasen beaufschlagt wird. Der Heizkessel 12 ist ausgangsseitig an einen Schornstein 18 angeschlossen. Von dem Heizkessel 12 führt eine Warmwasser-Vorlaufleitung 20 zum Verbraucher 2, und es führt von dort eine Wasser-Rücklaufleitung 22 zurück zum Heizkessel 12.

An den Brenner 16, der als selbständige, anschraubbare, nachrüstbare und ersetzbare Baueinheit z. B. gemäß Fig. 2 ausgeführt sein kann, ist eine Krattstoffleitung 24 angeschlossen. Bei dem transportierten Kraftstoff handelt es sich um einen Energieträger, wie Gas oder Erdöl. Die Zufuhr wird von einer Steuereinheit 26 (vgl. Fig. 2) gesteuert oder geregelt.

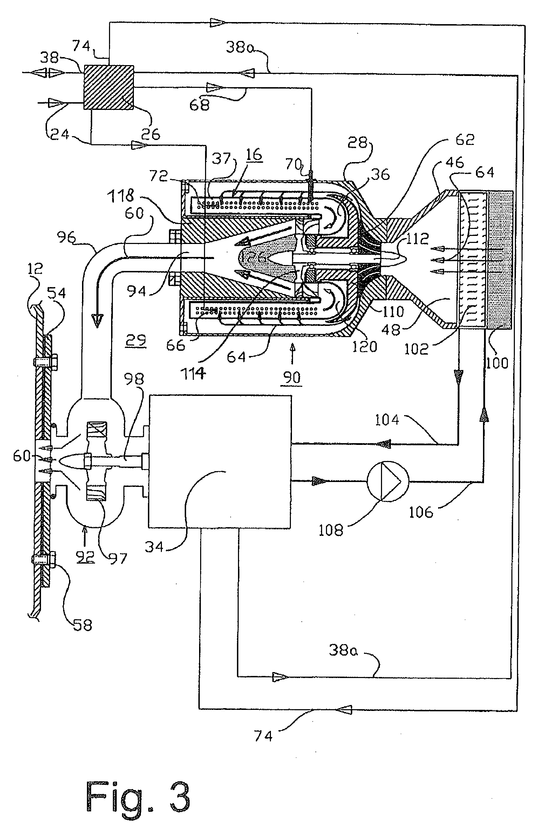

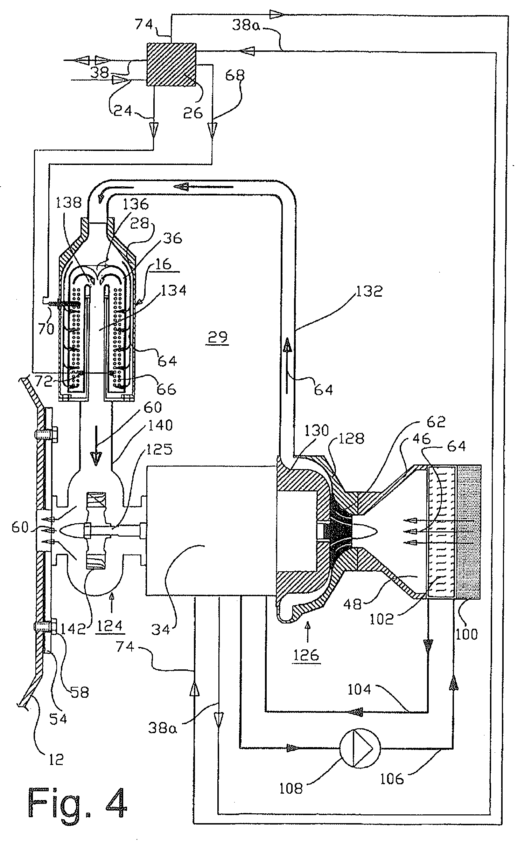

Der vorgeschaltete Brenner 16 enthält-wie entsprechend Fig. 2 eingezeichnet - in einem Brennergehäuse 28 eine von den heißen Gasen durchströmbare Gasturbinen-Anordnung 29 mit einer Gasturbine 30 und einen auf derselben horizontalen Welle 32 sitzenden elektrischen Generator 34, dessen Gehäuse räumlich fixiert ist. Hier ist ebenfalls eine räumlich fixierte, eine Brennkammer 36 bildende Brennkammer-Dose 37 untergebracht, die aus Fig. 2 ersichtlich ist. Es muß betont werden, dass für die Ausbildung derGasturbinen-Anordnung 29 und der Zuordnung der Gasturbine 30 und des Generators 34 sowie der Brennkammer 36 andere Gestaltungen gewählt werden können. Beispiele hierfür sind in den Fig. 3 und 4 dargestellt.

Im Betrieb gibt der Generator 34 - gesteuert über die Steuereinheit 26 - über eine Netzeinspeiseleitung 38a, eine Elektroleitung 38 und einen Hochfrequenz-Wandler 40 eine Spannung fester Frequenz, bevorzugt mit 50 Hertz, an das Hausnetz 4 und/oder an das öffentliche Netz 10 ab. Dabei kann vorgesehen sein, dass in der Leitung 8 ein Stromzähler 42 für den Strombezug und/oder ein Stromzähler 44 für die Strom-Rücklieferung angeordnet ist.

Der Generator 34 kann, über die Steuereinheit 26 (vgl. Fig. 2) gesteuert, auch als Anfahrmotor betrieben werden. Er bezieht dabei elektrische Energie aus dem öffentlichen Netz 10, und zwar über die Anfahrleitung 74.

In Fig. 2 ist eine bevorzugte Ausführung des Brenners 16 mit Brennergehäuse 28 dargestellt. Das Brennergehäuse 28 ist als Baueinheit konzipiert. Es umfaßt ein zylindrisches Ansaugrohr 46 mit Luft-Ansaugöffnung 48, daran anschließend ein zylindrisches Mittelstück 50 größeren Durchmessers und darauf folgend ein Mündungsstück 52 kleineren Durchmessers. Das Mündungsstück 52 ist zentral in einer Heizkesseltür 54 verschweißt. Diese Tür 54 ist unter Zwischenlage einer Dichtung 56 mittels Schrauben 58 an der rechten Seitenwand (vgl. Fig. 1) des Heizkessels 12 verschraubt. Ein herkömmlicher Brenner lässt sich somit leicht gegen die Baueinheit 54, 52, 50, 46 samt Inhalt austauschen. Die Ausgangsöffnung 59 des Mündungsstücks 52 führt knapp in den Kesselraum 14. Im Betrieb hat das hier abgegebene heiße Gas 60 eine Temperatur von z. B. 600 Grad Celsius. Von Bedeutung ist, dass die Flamme, die den Energieträger Gas oder Erdöl in heißes Gas 60 umsetzt, innerhalb des Brennergehäuses 28 vorhanden ist; sie reicht kaum über diese Ausgangsöffnung 59 hinaus in den Kesselraum 14.

Ersichtlich sind gemäß Fig. 2 innerhalb des Brennergehäuses 28 folgende Bauteile vorhanden, und zwar in der angegebenen Reihenfolge in Strömungsrichtung: der Generator 34, dessen Rotor auf der Welle 32 befestigt ist, ein ebenfalls auf der Welle 32 befestigtes Verdichterrad eines Verdichters 62, das zum Ansaugen von Verbrennungsluft 64 über die Luft-Ansaugöffnung 48 dient, die Brennkammer-Dose 37, durch die die Welle 32 hindurchläuft, und die ebenfalls auf der Welle 32 fixierte Gasturbine 30 in Form eines Hochdruck-Turbinenrades. Die Bauteile 30, 37 und 62 sind dabei innerhalb des größeren Mittelstücks 50 plaziert.

Die Brennkammer-Dose 37 stellt die eigentliche Brennkammer 36 dar. Sie ist als dosenförmiger Metallkörper ausgeführt, der mit einer Vielzahl von Löchern 66 versehen ist. Hier entsteht nach Zündung über eine elektrische Zündleitung 68 und eine Zündeinrichtung 70, z. B. mit einer Zündkerze, deren Spitze in die Brennkammer-Dose 37 hineinreicht, die Flamme. Die Zündeinrichtung 70 ist dabei in die Wand des Mittelstücks 50 eingeschraubt. Die Zufuhr des Energieträgers geschieht gesteuert über die Kraftstoffleitung 24. Letztere mündet in einer Anzahl von Düsen oder Kraftstoffzerstäubern 72. Diese sind insbesondere an der Frontseite der Brennkammer-Dose 37 angebracht.

Das Zünden mittels der Zündoinrichtung 70 und das Einspritzen über die Kraftstoffzerstäuber 72 wird von der Steuereinhe it 26 gesteuert, ebenso das Anfahren der Gasturbine 30 mittels des Anfahrmotors/Generators 34 durch Energieeinspeisung über die Elektro- oder Anfahrleitung 74. Die Steuereinheit 26 ist also nicht nur für die Kraftstoffversorgung, sondern auch für die elektronische Steuerung der Energieabgabe (Leitung 38a) und des Anfahrvorgangs (Leitung 74) von Bedeutung.

Wenn der als Startermotor wirkende Generator 34 die Gasturbine 30 unter Verdichtung der eingelassenen Verbrennungsluft 64 mittels des Verdichters 62 beim Startvorgang zum Drehen gebracht hat, und wenn das Luft-Energieträger-Gemisch in der Brennkammer 36 gezündet ist, läuft der Generator 34 - angetrieben durch die Turbine 30 - zu relativ hohen Drehzahlen hoch. Die vom Generator 34 abgegebene Spannung hat daher eine relativ hohe Frequenz, z. B. 1500 Hz. Die Frequenz wird im Frequenzwandler 40 auf Netzfrequenz, also auf 50 Hz, herabgesetzt. Dies geschieht bei Einspeisung ins Netz 4 und/oder 10 über die Leitungen 38a, 38.

Von Vortell ist, dass der Generator 34 durch die angesaugte Verbrennungsluft 64 insgesamt umstrichen und damit gekühlt wird. Er ist im übrigen so konstruiert, dass er die im Ansaugrohr 46 - also entfernt von der Flamme - herrschende Temperatur aushält.

Es muss betont werden, dass das Brennergehäuse 28 relativ klein ist. Es hat - je nach Leistungsanforderung - z. B. bei der Versorgung eines Wohnhauses einen Durchmesser von nur 8 cm. Die Gesamtleistung des in Fig. 2 dargestellten Brenners 14 kann z. B. nur 12 kW thermisch und nur 2 kW elektrisch betragen.

Fig. 3 zeigt eine Ausführungsform der Erfindung. Von Bedeutung ist hier, dass die Gasturbinen-Anordnung 29 zwei getrennte Turbinen besitzt, und zwar eine erste oder Hochdruck-Gasturbine 90 und eine zweite oder Niederdruck-Gasturbine 92. Beide sind mittels eines zentralen Austrittskanals 94 und eines daran anschließenden starren, z. B. metallischen Verbindungskanals 96 strömungstechnisch miteinander verbunden. Das Turbinenrad 97 der zweiten Gasturbine 92 ist dabei über eine Welle 98 mit dem Generator 34 verbunden. Diese Konstruktion hat zur Folge, dass die erste Gasturbine 90 zwar mit sehrhoher Drehzahl läuft, imstationären Zustand z. B. mit 90 000 U/min, dass aber die zweite Gasturbine 92 mit wesentlich geringerer Drehzahl läuft, z. B. mit 20 000 U/min. Durch diese Drehzahlherabsetzung kann ein relativ wenig aufwendiger Frequenzwandler 40 eingesetzt werden.

Nach Fig. 3 gelangt die Ansaug- oder Verbrern nungsluft 64 hier über ein Luftfilter 100, das zur Luftreinigung, aber insbesondere zur Geräuschdämpfung vorgesehen ist, und einen Wärmetauscher 102 in das Ansaugrohr 46. Dieser Wärmetauscher 102 ist über eine Zuleitung 104 und eine Rückleitung 106 sowie eine Kühlwasser-Pumpe 108 mit dem Generator 34 verbunden. Das über die Zuleitung 104 zugeführte Kühlwasser dient zum an sich bekannten Kühlen des Generators 34, während das über die Rückleitung 106 zurückgeleitete Wasser zur Vorwärmung der Verbrennungsluft 64 herangezogen wird.

Vom sich verjüngenden Ansaugrohr 46 gelangt die Verbrennungsluft 64 über den Verdichter 62 in das Brennergehäuse 28. Das Verdichterrad des Verdichters 62 ist dabei im sich erweiternden Eingangsteil untergebracht. Im endseitig geschlossenen zylindrischen Hauptteil ist die Brennkammer-Dose 37 zentral angeordnet. Sie ist hier als metallischer Ringzylinder ausgebildet. Dieser ist allseitig im Abstand zur Innenwand des Brennergehäuses 28 angeordnet, so dass die Verbrennungsluft 64 seitlich von außen eintreten kann. Dies ist durch kleine Pfeile markiert.

Der Strömungsweg mit Umlenkung (Umlenkweg 120) wird durch ein innen (aber auch außen) gekrümmtes Stirnteil 110 bestimmt. In diesem Stirnteil 110 liegt koaxial und drehbar eine Welle 112, auf der einerseits das Verdichterrad des Verdichters 62 und andererseits das Turbinenrad 114 der ersten Gasturbine 90 sowie eine Haube 116 befestigt sind. Die Haube 116 bildet zusammen mit dem Inneren des Kanalstücks 118 den sich zunächst konisch verengenden, dann zylindrisch weitergeführten zentralen Gas-Austrittskanal 94. Die Brennkammer-Dose 37 ist auch hier wieder mit einer Zündeinrichtung 70 und mit einer Zahl von Kraftstoff-Zerstäubern 72 versehen.

Auch hier wird die Brennkammer 36 im wesentlichen durch die Brennkammer-Dose 37, dann aber auch durch den ausgangsseitigen Umlenkweg 120 gebildet. Das hier erzeugte heiße Gas 60 gelangt über das in Drehung versetzte Turbinenrad 114, den Gas-Austrittskanal 94 und den anschließenden (hier speziell gekrümmten) Verbindungskanal 96 auf das Turbinenrad 97. Dieses dient mittels der Welle 98 zum Antrieb des Generators 34. Das heiße Gas 60 gelangt - nach gewisser Energieabgabe - über die Öffnung in der Heizkesseltür 54 in den Heizkessel 12. Die Bauelemente 34, 92, 96, 28, 46, 102, 100 bilden, beispielsweise mit Hilfe nicht-gezeigter starrer Verbindungselemente, wie Stangen oder Trägern, zusammen eine eigenständige Anbaueinheit. Sie kann mittels Schrauben 58 oder anderer Fixierelemente an der Heizkesseltür 54 befestigt und von dieser wieder gelöst werden.

Es ist erkennbar, dass das Hochdruck-Gasturbinenrad 97 vorliegend zur Erzeugung eines hohen Abgasdruckes dient. Mit Hilfe dieses Druckes wird das nachgeordnete Generator-Turbinenrad 97 mit geringerer Drehzahl gedreht.

Es ist bedeutsam, dass bei der in Figur 3 gezeigten Ausführung bei Dimensionierung für ein Wohnhaus-wie Versuche ergeben haben - ein An- oder Hochlauf auf Nenndrehzahl innerhalb relativ kurzer Zeit erfolgt, z. B. innerhalb von 5 Sekunden.

Der Hochlauf von Drehzahl Null geschieht dabei folgendermaßen: Es wird angenommen, dass der Heizkessel 12 bei Bedarf (Feststellung durch nicht gezeigte, bei Haus-Heizungsanlagen übliche Sensoren) Heizenergie in Form von heißem Gas 60 anfordert. Die Steuereinheit 26 gibt daraufhin Anfahrstrom über die Anfahrleitung 74 an den Generator 34. Dieser setzt sich sodann in Drehbewegung. Durch die Drehbewegung wird das angekoppelte Generator-Turbinenrad 97 ebenfalls in Drehbewegung versetzt. Infolgedessen wird im Verbindungskanal 96 ein Unterdruck erzeugt, der wiederum das Turbinenrad 114 der ersten Gasturbine 90 mit dem über die Welle 112 angekoppelten Verdichterrad 62 in Drehbewegung versetzt. Jetzt wird die erste Gasturbine 90 gestartet, indem über die Steuereinheit 26 Treibstoff in die Zerstäuber 72 eingespritzt und von der Zündeinrichtung 70 gezündet, d. h. zur Verbrennung gebracht wi rd.

Bei einer vorgegenebenen Drehzahl der ersten Gasturbine 90, z. B. bei 60 000 U/min, die unterhalb der Nenndrehzahl liegt, wird der Anfahrstrom von der Steuereinheit 26 abgeschaltet. Die erste Gasturbine 90 läuft sodann weiter hoch, bis sie ihre Nenndrehzahl, z. B. die bereits erwähnten 90 000 U/min, erreicht hat. Der Generator 34 erzeugt - angetrieben durch die Strömung des heißen Gases 60 - elektrische Energie. Diese Energie wird über die Leitung 38a, 38 und über den Frequenzwandler 40 in das Hausnetz 4 und/oder das öffentliche Netz 10 eingespeist.

Da eine direkte mechanische Kopplung zwischen erster und zweiter Gasturbine 90, 92 nicht vorhanden ist, erreicht der Generator 34 nur eine geringere (gewünschte) Drehzahl, z. B. von 15 000 oder 20 000 U/min. Dies hat, wie bereits dargelegt, den Vorteil, dass die Frequenzwandlung bei der Einspeisung ins Netz 4, 10 apparativ recht einfach und kostenmäßig günstig ist.

In Fig. 4 ist wiederum eine alternative Ausführungsform dargestellt, die mit einer einzigen Gasturbine 124 als Gasturbinen-Anordnung 29 auskommt.

Diese Gasturbine 124 ist mittels einer Welle 125 direkt an den Generator 34 angekoppelt. Wie bei Fig. 3 stellen auch hier Generator 34 und Gasturbine 124 mitsamt den angeschlossenen Bauelementen eine eigenständige Baueinheit dar, die von der Heizkesseltür 54 durch Lösen von Schrauben 58 entfernt werden kann.

Auch hier wird eine gute Kühlung des Generators 34 erzielt. Dazu ist auch hier wieder ein Wärmetauscher 102 (hinter einem Luftfilter 100 zur Geräuschdämpfung) vorgesehen, der mittels Leitiungen 104, 106 und Kühlwasser-Pumpe 108 mit dem Generator 34 verbunden ist.

Wie in Fig. 3 wird auch hier der Hochlauf durch Heizenergie-Anforderung des Heizkessels 12 ausgelöst. Der Generator 34 wirkt dabei als Startermotor. Bei jedem Heizvorgang wird somit auch hier automatisch elektrische Energie erzeugt, so dass die Energienutzung aus dem öffentlichen Netz 10 für den Nutzer in diesen Phasen unnötig wird und er Kosten sparen kann.

Gemäß Fig. 4 gelangt die angesaugte Verbrennungsluft 64 nach Durchtritt durch die Bauelemente 100, 102 in das sich verjüngende Ansaugrohr 46. Von dort wird sie über das Verdichterrad des Verdichters 62, das auf der Welle 125 sitzt, in ein Gehäuse 126 geleitet. Dieses bildet zwischen einem Außenstück 128 und einem Ansatzstück 130 einen Ringkanal, der in einen seitlich angebrachten, in sich starren Kanal 132 mündet. Der seitliche Kanal 132 wiederum mündet in einen zylindrischen Brenner 16, der ähnlich aufgebaut ist wie derjenige von Fig. 3. Er enthält in einem Brennergehäuse 28, das ein sich aufweitendes Eingangsteil und ein zylindrisches Ausgangsteil aufweist, eine zentral angebrachte, hohlzylindrische Brennkammer-Dose 37 mit einem zentralen, hier zylindrischen Gas-Austrittskanal 134.

Wiederum kann die Verbrennungsluft 64 seitlich von außen in der gezeigten Pfeilrichtung in die Dose 37 eintreten. Die Brennkammer-Dose 37 besitzt wiederum mindestens eine Zündeinrichtung 70 und mehrere Düsen 72 zum Einsprühen des Brennmaterials. Auch hier kann ein gekrümmtes Stirnteil 136 mit Bildung eines Umlenkwegs 138 als Zuleitung zum Gas-Austrittskanal 134 vorgesehen sein. Dieser Kanal 134, durch den das heiße Gas 60 strömt, führt über einen Anschlusskanal 140 auf das Turbinenrad 142 der Gasturbine 124. Letztere wird durch das heiße Gas 60 angetrieben, so dass auch hierwieder derangeschlossene Generator 34 elektrische Energie an die Ausgangsleitung 38a liefert. Von hier gelangt die Energie - in Analogie zu Fig. 3 - über den Frequenzwandler 40 ins Netz 4 und/oder 10. Die dargestellte Heizungsanlage liefert somit neben der thermischen auch elektrische Energie direkt für den Nutzer, wobei überschüssige elektrische Energie ins öffentliche Netz 10 eingespeist werden kann.

### Bezugszeichenliste

- 1: Gebäude
- 2: thermischer Verbraucher
- 4: Hausnetz
- 6: elektrischer Verbraucher
- 8: Leitung
- 10: öffentliches Netz
- 12: Heizkessel
- 14: Brennraum
- 16: Brenner
- 18: Schornstein
- 20: Warmwasser-Vorlauf
- 22: Wasser-Rücklauf
- 24: Kraftstoffleitung
- 26: Steuereinheit
- 28: Brennergehäuse
- 29: Gasturbinen-Anordnung
- 30: Gasturbine
- 32: Welle
- 34: Generator
- 36: Brennkammer
- 37: Brennkammer-Dose
- 38: Elektroleitung
- 38a: Leitung für Netzeinspeisung
- 40: Frequenzwandler
- 42: Stromzähler für Strombezug
- 44: Stromzähler für Strom-Rücklieferung
- 46: Ansaugrohr
- 48: Luft-Ansaugöffnung
- 50: Mittelstück
- 52: Mündungsstück
- 54: Heizkesseltür
- 56: Dichtung
- 58: Schraube
- 59: Ausgangsöffnung
- 60: heißes Gas
- 62: Verdichter
- 64: Verbrennungsluft
- 66: Loch
- 68: Zündleitung
- 70: Zündeinrichtung
- 72: Kraftstoffzerstäuber
- 74: Leitung zum Anfahren
- 90: erste Gasturbine
- 92: zweite Gasturbine
- 94: zentraler Austrittskanal
- 96: Verbindungskanal
- 97: Turbinenrad
- 98: Welle
- 100: Luftfilter
- 102: Wärmetauscher
- 104: Zuleitung
- 106: Rückleitung
- 108: Kühlwasser-Pumpe
- 110: Stirnteil
- 112: Welle
- 114: Turbinenrad
- 116: Haube
- 118: Kanalstück
- 120: Umlenkweg
- 124: Gasturbine
- 125: Welle
- 126: Gehäuse
- 128: Außenstück
- 130: Ansatzstück
- 132: seitlicher Kanal
- 134: Gas-Austrittskanal
- 136: Stirnteil
- 138: Umlenkweg
- 140: Anschlußkanal
- 142: Turbinenrad

## Patentansprüche

1. Baueinheit, die an einem Heizkessel (12) einer Heizungsanlage für mindestens einen Verbraucher (2) in einem Gebäude (1) anbringbar ist,
- mit einer Brennkammer (36), in der ein Energieträger, wie Gas oder Erdöl, verbrennbar ist, wobei die in der Brennkammer (36) erzeugten heißen Gase (60) in den Heizkessel (12) einströmen, der mit einem Warmwasser-Vorlauf (20) und einem Wasser-Rücklauf (22) verbunden und an einen Schornstein (18) zur Abgabe der Gase (60) angeschlossenen ist,
- mit einer Luft-Ansaugöffnung (48), über die der Brennkammer (36) Verbrennungs-Luft (64) zum Verbrennen des Energieträgers zuführbar ist,
- mit einer zwischen der Luft-Ansaugöffnung (48) und dem Heizkessel (12) angeschlossenen und mit einem elektrischen Generator (34) zur Abgabe von elektrischer Energie verbundenen Gasturbinen-Anordnung, die eine von den in der Brennkammer (36) erzeugten heißen Gasen (60) beaufschlagte erste Gasturbine (90) und eine dieser nachgeschaltete zweite Gasturbine (92) umfasst,
- wobei die erste Gasturbine (90) und die zweite Gasturbine (92) ohne direkte mechanische Kopplung über einen Verbindungskanal (96) miteinander strömungstechnisch verbunden sind,
- wobei der ersten Gasturbine (90) ein Verdichter (62) zugeordnet ist, dessen Verdichterrad ebenso wie das Turbinenrad (114) der ersten Gasturbine (90) auf einer ersten Welle (112) befestigt sind, die innerhalb eines Brennergehäuses (28) mit einem die Luft-Ansaugöffnung (48) aufweisenden Ansaugrohr (64) angeordnet ist, in dem ein Wärmetauscher (102) angeordnet ist, der mit dem Generator (34) zu dessen Kühlung über Kühlmittelleitungen (104, 106) verbunden ist, und
- wobei das Turbinenrad (97) der zweiten Gasturbine (92) über eine zweite Welle (98) mit dem Generator (34) verbunden ist.

2. Baueinheit nach Anspruch 1,
**dadurch gekennzeichnet,**
**dass** im stationären Zustand die zweite Gasturbine (92) mit einer wesentlich geringeren Drehzahl als die erste Gasturbine (90) läuft.

3. Baueinheit, die an einem Heizkessel (12) einer Heizungsanlage für mindestens einen Verbraucher (2) in einem Gebäude (1) anbringbar ist,
- mit einer Brennkammer (36), in der ein Energieträger, wie Gas oder Erdöl, verbrennbar ist, wobei die in der Brennkammer (36) erzeugten heißen Gase (60) in den Heizkessel (12) einströmen, der mit einem Warmwasser-Vorlauf (20) und einem Wasser-Rücklauf (22) verbunden und an einen Schornstein (18) zur Abgabe der Gase (60) angeschlossenen ist,
- mit einer Luft-Ansaugöffnung (48), über die der Brennkammer (36) Verbrennungs-Luft (64) zum Verbrennen des Energieträgers zuführbar ist,
- mit einer zwischen der Luft-Ansaugöffnung (48) und dem Heizkessel (12) angeschlossenen, von den heißen Gasen (60) durchströmbaren und mit einem elektrischen Generator (34) zur Abgabe von elektrischer Energie über eine gemeinsame Welle (125) verbundenen Gasturbine (124),
- mit einem Verdichter (62), dessen Verdichterrad auf der Welle (125) des Generators (34) angeordnet ist, und
- mit einem mit dem Generator (34) zu dessen Kühlung über Kühlmittelleitungen (104, 106) verbundenen Wärmetauscher (102), der in einem die Luft-Ansaugöffnung (48) aufweisenden Ansaugrohr (64) angeordnet ist.

4. Baueinheit nach Anspruch 1 oder 2,
**dadurch gekennzeichnet,**
**dass** die Brennkammer (36) durch einen Metallkörper (37) mit einer Vielzahl von Löchern (66) gebildet ist.

5. Baueinheit nach einem der Ansprüche 1 bis 4,
**dadurch gekennzeichnet,**
**dass** ein die Brennkammer (36) enthaltender Brenner (16) vom Generator thermisch getrennt ist.

6. Baueinheit nach einem der Ansprüche 1 bis 5,
**gekennzeichnet durch**
eine elektrische Zündeinrichtung (70), die in die Brennkammer (36) hineinreicht.

7. Baueinheit nach einem der Ansprüche 1 bis 6,
**dadurch gekennzeichnet,**
**dass** der Generator (34) an einen Frequenzumrichter (40) angeschlossen ist, der die Frequenz der vom Generator (34) erzeugten Spannung auf einen festen Wert, insbesondere aus 50Hz, wandelt.

8. Baueinheit nach einem der Ansprüche 1 bis 7,
**dadurch gekennzeichnet,**
**dass** der Generator (34) von einer Steuereinheit (26) als Startermotor betreibbar ist.

## Claims

1. Unit, which can be fitted to a boiler (12) of a heating system in a building (1) for at least one user (2),
- having a combustion chamber (36), in which an energy source, such as gas or oil, can be combusted,
wherein the hot gases (60) produced in the combustion chamber (36) flow into the boiler (12), which is connected to a warm water flow pipe (20) and a water return pipe (22) and is connected to a chimney (18) for release of the gases (60).
- having an air intake opening (48), via which combustion air (64) for the combustion of the energy source can be supplied to the combustion chamber (36).
- having a gas turbine arrangement which is connected between the air intake opening (48) and the boiler (12) and which is connected to an electrical generator (34) for the release of electrical energy, which comprises one first gas turbine (90) charged by the hot gases (60) produced in the combustion chamber (36), and one second downstream gas turbine (92),
- wherein the first gas turbine (90) and the second gas turbine (92) are connected with each other fluidically without direct mechanical linking via a connection channel (96).
- wherein a compressor (62) is allocated to the first gas turbine (90), the compressor blade of which is attached, just as the turbine blade (114) of the first gas turbine (90), on a first shaft (112), which is arranged inside a burner casing (28) with an intake pipe (64) having the air intake opening (48), in which a heat exchanger (102) is arranged, which is connected to the generator (34) for the cooling thereof via coolant pipes (104, 106), and
- wherein the turbine blade (97) of the second gas turbine (92) is connected to the generator (34) via a second shaft (98).

2. Unit according to claim 1,
**characterised in that**,
in the stationary state, the second gas turbine (92) rotates with a rotational speed which is substantially lower than the first gas turbine (90).

3. Unit, which can be fitted to a boiler (12) of a heating system in a building (1) for at least one user (2),
- having a combustion chamber (36), in which an energy source, such as gas or oil, can be combusted, wherein the hot gases (60) produced in the combustion chamber (36) flow into the boiler (12), which is connected to a warm water flow pipe (20) and a water return pipe (22) and is connected to a chimney (18) for release of the gases (60).
- having an air intake opening (48), via which combustion air (64) for the combustion of the energy source can be supplied to the combustion chamber (36).
- having a gas turbine (124) connected between the air intake opening (48) and the boiler (12), through which hot gases (60) can flow, and connected to an electrical generator (34) for the release of electrical energy via a mutual shaft (124),
- having a compressor (62), the compressor blade of which is arranged on the shaft (125) of the generator (34), and
- having a heat exchanger (102), which is connected to the generator (34) for the cooling thereof via coolant pipes (104, 106), and which is arranged in an intake pipe (64) having the air intake opening (48).

4. Unit according to claim 1 or 2,
**characterised in that**
the combustion chamber (36) is formed by a metal body (37) with a plurality of small holes (66).

5. Unit according to one of claims 1 to 4,
**characterised in that**,
one of the burners (16) containing the combustion chamber (36) is thermally separated from the generator.

6. Unit according to one of claims 1 to 5,
**characterised by**,
an electrical ignition device (70), which extends into the combustion chamber (36).

7. Unit according to one of claims 1 to 6,
**characterised in that**,
the generator (34) is connected to a frequency converter (40), which converts the frequency of the voltage produced by the generator (34) to a fixed value, in particular to 50Hz.

8. Unit according to one of claims 1 to 7
**characterised in that**,
the generator (34) can be operated from a control unit (26) as a starter motor.

## Revendications

1. Ensemble, qui peut être mis en place sur une chaudière (12) d'une installation de chauffage pour au moins un consommateur (2) dans un bâtiment (1),
- avec une chambre de combustion (36) dans laquelle une source d'énergie telle que du gaz ou du pétrole peut être brûlée, les gaz (60) très chauds produits dans la chambre de combustion (36) entrant dans la chaudière (12) qui est branchée sur un départ d'eau chaude (20) et sur un retour d'eau (22) et qui est reliée à une cheminée (18) pour le rejet des gaz (60),
- avec une ouverture d'aspiration d'air (48) par le biais de laquelle de l'air de combustion (64) peut être conduit à la chambre de combustion (36) pour la combustion de la source d'énergie,
- avec un dispositif de turbine à gaz branché entre l'ouverture d'aspiration d'air (48) et la chaudière (12) et raccordé à un générateur électrique (34) pour la fourniture d'énergie électrique, dispositif qui comprend une première turbine à gaz (90) recevant les gaz (60) très chauds produits dans la chambre de combustion (36) et une deuxième turbine à gaz (92) installée en aval de la première,
- la première turbine à gaz (90) et la deuxième turbine à gaz (92) étant raccordées l'une à l'autre de manière fluidique sans couplage mécanique direct par le biais d'une canalisation de raccordement (96),
- un compresseur (62) étant affecté à la première turbine à gaz (90), dont la roue de compresseur ainsi que la roue de turbine (114) de la première turbine à gaz (90) sont fixées sur un premier arbre (112) qui est disposé à l'intérieur d'un carter de brûleur (28) avec un tube d'aspiration (64) présentant l'ouverture d'aspiration d'air (48) dans lequel est disposé un échangeur de chaleur (102) qui est raccordé au générateur (34) pour le refroidissement de ce dernier par le biais de conduites de réfrigérant (104, 106), et
- la roue de turbine (97) de la deuxième turbine à gaz (92) étant raccordée au générateur (34) par le biais d'un deuxième arbre (98).

2. Ensemble selon la revendication 1,
**caractérisé en ce que**,
dans l'état stationnaire, la deuxième turbine à gaz (92) tourne avec une vitesse de rotation essentiellement plus faible que la première turbine à gaz (90).

3. Ensemble, qui peut être mis en place sur une chaudière (12) d'une installation de chauffage pour au moins un consommateur (2) dans un bâtiment (1),
- avec une chambre de combustion (36) dans laquelle une source d'énergie telle que du gaz ou du pétrole peut être brûlée, les gaz (60) très chauds produits dans la chambre de combustion (36) entrant dans la chaudière (12) qui est raccordée à un départ d'eau chaude (20) et à un retour d'eau (22) et qui est branchée sur une cheminée (18) pour le rejet des gaz (60),
- avec une ouverture d'aspiration d'air (48) par le biais de laquelle de l'air de combustion (64) peut être conduit à la chambre de combustion (36) pour la combustion de la source d'énergie,
- avec une turbine à gaz (124) branchée entre l'ouverture d'aspiration d'air (48) et la chaudière (12), pouvant être traversée par les gaz (60) très chauds et raccordée à un générateur (34) électrique pour la fourniture d'énergie électrique par le biais d'un arbre (125) commun,
- avec un compresseur (62) dont la roue de compresseur est disposée sur l'arbre (125) du générateur (34), et
- avec un échangeur de chaleur (102) qui est raccordé au générateur (34) pour le refroidissement de ce dernier par le biais de conduites de réfrigérant (104, 106), et qui est disposé dans un tube d'aspiration (64) présentant l'ouverture d'aspiration d'air (48).

4. Ensemble selon la revendication 1 ou 2,
**caractérisé en ce que**
la chambre de combustion (36) est formée par un corps métallique (37) avec une multiplicité de trous (66).

5. Ensemble selon une des revendications 1 à 4,
**caractérisé en ce**
**qu'**un brûleur (16) contenant la chambre de combustion (36) est séparé thermiquement du générateur.

6. Ensemble selon une des revendications 1 à 5,
**caractérisé par**
un équipement d'allumage électrique (70) qui entre dans la chambre de combustion (36).

7. Ensemble selon une des revendications 1 à 6,
**caractérisé en ce que**
le générateur (34) est raccordé à un convertisseur de fréquence (40) qui convertit la fréquence de la tension produite par le générateur (34) à une valeur fixe, en particulier de 50 Hz.

8. Ensemble selon une des revendications 1 à 7,
**caractérisé en ce que**
le générateur (34) peut être mis en oeuvre en tant que moteur de démarreur par une unité de commande (26).
